# EUROPEAN PATENT APPLICATION

(11) **EP 0 953 903 A2**
(43) Date of publication of application: **03.11.1999**
(21) Application number: 99102487.8
(22) Date of filing: 10.02.1999
(51) Int. Cl.: G06F 9/46

(54) **Semaphore for a computer system**

(30) Priority: 29.04.1998 GB 9809022
(71) Applicant: International Computers Ltd., London, EC2A 1DS (GB)
(72) Inventor: Lysons, John Spencer Marshall, Audenshaw, Manchester M34 5EL (GB)
(74) Representative: Guyatt, Derek Charles

(57) **Abstract**

A computer system is described in which access to a shared resource is controlled by a semaphore. The semaphore comprises a lock value and a key value. When a process wishes to access the shared resource, it calls a reserve function which increments the lock value and stores the unchanged value of the lock value in a local variable. The reserve function then performs a loop in which it repeatedly compares the key value with the local variable until they equal. When the process has finished with the shared resource, it calls a release function which increments the key value. This guarantees to allocate the semaphore to processes in the order in which the processes requested it (i.e. in chronological order), in a cheap and effective manner.

## Description

### Background to the Invention

This invention relates to semaphores for computer systems.

A semaphore is a mechanism for controlling access to a shared resource by a number of concurrent processes. The shared resource may, for example, be an area of shared memory. The concurrent processes may run on a single processor, or on different processors.

In one known form of semaphore, referred to as a spinlock semaphore, each shared resource has a semaphore bit associated with it. Whenever a process wishes to access a shared resource, it tests the semaphore bit associated with the resource. If the semaphore bit is set, the process "spins" in a tight loop, in which it repeatedly tests the semaphore value. When the process finds that the semaphore bit is reset, it sets the semaphore bit and proceeds to access the shared resource. The testing and setting of the semaphore bit must be performed as a single atomic (i.e. indivisible) operation. When the process has finished accessing the shared resource, it resets the semaphore bit.

A problem with this conventional spinlock semaphore, however, is that it cannot guarantee to allocate the semaphore to the processes in the order in which the processes requested it. In particular, it is possible for two processes to continually swap a resource between them, thereby blocking a third process. The object of the present invention is to provide an improved spinlock semaphore that is guaranteed to allocate the semaphore in the order in which the processes requested it.

### Summary of the Invention

According to the invention, a method of controlling access by a plurality of processes to a plurality of shared resources in a computer system comprises:
(a) providing each of the shared resources with a first semaphore value and a second semaphore value;
(b) when a process requires to access a shared resource, storing a reservation number as a local variable for the process, the reservation number being derived from the first semaphore value of the resource, updating the first semaphore value of the resource in a predetermined manner, performing a loop which repeatedly compares the reservation number stored for the process with the second semaphore value of the resource, and permitting the process to access the resource when the reservation number stored for the process is in a predetermined relationship with the second semaphore value of the resource; and
(c) when a process has finished accessing a shared resource, updating the second semaphore value of the resource in a predetermined manner.

### Brief Description of the Drawings

Figure 1 is a schematic diagram showing a computer system embodying the invention.
Figure 2 is a flow chart showing part of a client process.
Figure 3 is a flow chart of a Reserve_semaphore function.
Figure 4 is a flow chart of a Release_semaphore function.

### Description of an Embodiment of the Invention

One semaphore mechanism in accordance with the invention will now be described by way of example with reference to the accompanying drawings.

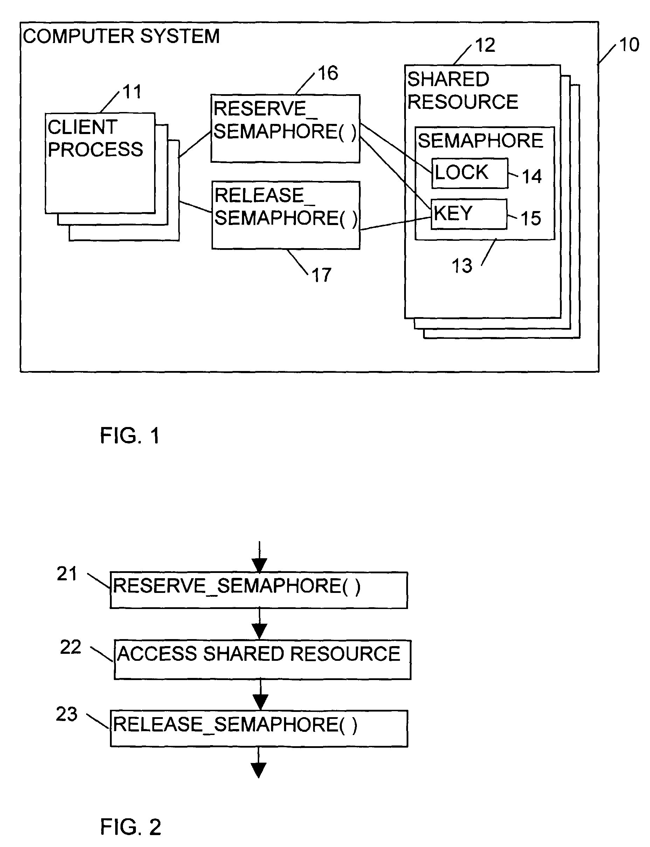

Figure 1 shows a computer system 10, which runs a number of client processes 11. The system may comprise a single processing unit with a multi-threading operating system allowing a number of processes to run concurrently. Alternatively, the system may be a multi-processor system, in which different processes can run simultaneously on different processors.

The client processes 11 share a number of resources 12, such as memory. Each resource has a semaphore 13 associated with it. The semaphore comprises a lock value 14 and a key value 15. The lock and key values are shared variables, and in this embodiment are initially set to the same value.

Two functions are provided for managing the semaphores: a Reserve_semaphore() function 16 and a Release_semaphore() function 17. These functions can be called by the client processes.

Figure 2 shows part of one of the client processes which makes use of the semaphore.

(Step 21) When the client process wishes to access a shared resource, it calls the Reserve_semaphore() function. The call contains a parameter, specifying the identity of the semaphore associated with the resource in question.

(Step 22) When this call returns, the client process accesses the shared resource.

(Step 23) The client process then calls the Release_semaphore() function.

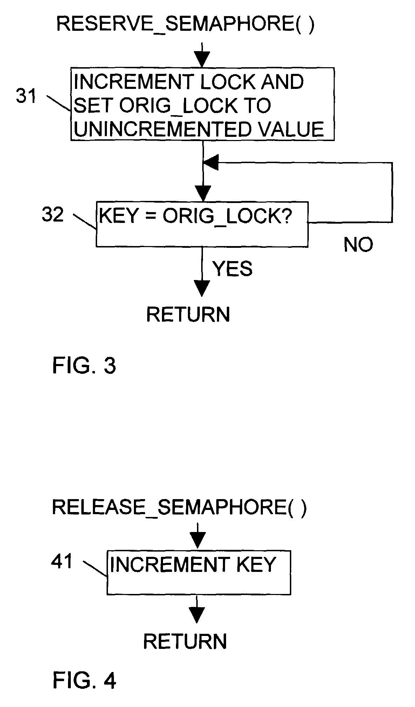

Figure 3 shows the Reserve_semaphore() function.

(Step 31) The function increments the lock value of the semaphore, and sets a local variable orig_lock equal to the unincremented value of the lock. This must be done as a single indivisible action. For example, this step may be performed by the following Intel code:
mov eax,1
xadd lock,eax ; this is the indivisible action
mov orig_lock,eax

It should be noted that there is a separate orig_lock per client, whereas all clients share the same lock and key values.

(Step 32) The function then compares the key value of semaphore with the orig_lock value. If they are equal, the function returns; otherwise it repeats Step 32. Thus, the function performs a loop in which it repeatedly tests the key value of the semaphore, until the key value becomes equal to the orig_lock value.

Figure 4 shows the Release_semaphore() function.

(Step 41) The function increments the key value associated with the semaphore, and then returns. (Instead of incrementing the key, this step may set key = orig_lock + 1, which in this embodiment gives the same result).

It is not strictly necessary for the incrementing of the key value to be performed as an indivisible action, since the only client allowed to update the key value is the one currently holding the semaphore.

In summary, it can be seen that the system provides a spinlock semaphore having two components: a lock value and a key value. When a process reserves a semaphore, the lock value is incremented and its unincremented value is saved as a local variable orig_lock. If orig_lock is equal to the key value, the process can immediately access the shared resource. If on the other hand orig_lock is not equal to the key value (because one or more processes have previously reserved the semaphore, and have not yet released it), a spin loop is entered. Eventually, the previous processes will release the semaphore, by incrementing the key value. When the key value becomes equal to orig_lock, the process is allowed to proceed to access the shared resource.

In other words, when a process wishes to access a particular resource, it is allocated a reservation number (orig_lock), derived from the lock value of the resource. The process then waits until the key value of the resource is in a predetermined relationship with (in this embodiment, is equal to) the reservation number of the process, before accessing the resource.

The semaphore guarantees to allocate the semaphore to processes in the order in which the processes requested it (i.e. in chronological order). It is also very cheap (in terms of processing time and memory requirements) and effective.

It will be appreciated that the lock and key values will eventually reach a maximum value, and will roll-over to zero.

This maximum value must be chosen to be greater than the maximum number of Reserve_semaphore requests that may be pending at any given time.

### Some possible modifications

It will be appreciated that many modifications may be made to the system described above without departing from the scope of the present invention.

Different functions may be used to update the lock and key. For example, instead of incrementing the lock and key, they may be decremented or rotated.

Furthermore, instead of initialising the lock and key to the same value, they may initially have different values. In this case, instead of comparing the orig_lock and key for equality, the comparison checks whether the difference between orig_lock and key is the same as the difference between the lock and key at start of day.

## Claims

1. A method of controlling access by a plurality of processes to a plurality of shared resources in a computer system, the method comprising:
(a) providing each of the shared resources with a first semaphore value and a second semaphore value;
(b) when a process requires to access a shared resource, storing a reservation number as a local variable for the process, the reservation number being derived from the first semaphore value of the resource, updating the first semaphore value of the resource in a predetermined manner, performing a loop which repeatedly compares the reservation number stored for the process with the second semaphore value of the resource, and permitting the process to access the resource when the reservation number stored for the process is in a predetermined relationship with the second semaphore value of the resource;
and
(c) when a process has finished accessing a shared resource, updating the second semaphore value of the resource in a predetermined manner.

2. A method according to Claim 1 wherein updating the first semaphore value and storing the reservation number as a local variable are performed as a single indivisible action.

3. A method according to Claim 1 or 2, wherein updating the first semaphore value comprises incrementing the first semaphore value, and updating the second semaphore value comprises incrementing the second semaphore value

4. A method according to any preceding claim wherein the first and second semaphore key values are initially set equal, and wherein the loop repeatedly compares the reservation number with the second semaphore value until they are equal.

5. A computer system comprising:
(a) a plurality of processes;
(b) a plurality of shared resources, each having a first semaphore value and a second semaphore value;
(c) a reserve function, callable by a process when the process requires to access a shared resource, the reserve function comprising means for storing a reservation number as a local variable for the process, the reservation number being derived from the first semaphore value of the resource, means for updating the first semaphore value of the resource in a predetermined manner, means for performing a loop which repeatedly compares the reservation number stored for the process with the second semaphore value of the resource, and means for permitting the process to access the resource when the reservation number stored for the process is in a predetermined relationship with the second semaphore value of the resource;
and
(d) a release function callable by a process when the process has finished accessing a shared resource, the release function comprising means for updating the second semaphore value of the resource in a predetermined manner.

6. A computer system according to Claim 5 comprising means for updating the first semaphore value and storing the reservation number as a local variable, as a single indivisible action.

7. A computer system according to Claim 5 or 6, wherein the means for updating the first semaphore value comprises means for incrementing the first semaphore value, and the means for updating the second semaphore value comprises means for incrementing the second semaphore value

8. A computer system according to any one of Claims 5 to 7 wherein the first and second semaphore key values are initially set equal, and wherein the means for performing a loop repeatedly compares the reservation number with the second semaphore value until they are equal.
